# EUROPEAN PATENT APPLICATION

(11) **EP 3 244 102 A1**
(43) Date of publication of application: **15.11.2017**
(21) Application number: 17000715.7
(22) Date of filing: 26.04.2017
(51) Int. Cl.: F16J 15/3236, E21B 33/12

(54) **INTERLOCKING ANNULAR PRESSURE SEAL ASSEMBLY**

(30) Priority: 12.05.2016 US 201615153089
(71) Applicant: Freudenberg Oil & Gas, LLC, Houston TX Texas 77040 (US)
(72) Inventor: LOGIUDICE, Michael, Cypress, Texas 77429 (US); WALLACE, Brian, Kingwood, Texas 77345 (US)
(74) Representative: Ripper, Monika Sigrid

(57) **Abstract**

A seal assembly (10) for sealing between an inner surface of a bore (6) and an outer surface of a mandrel (8) includes at least one annular seal (12) including a channel (20) disposed in an axial end thereof with a locking shoulder (30) facing axially away from an opening end of the channel (20). The annular seal (12) has an innermost diameter that is smaller than an outer diameter of the mandrel (8) and has an outermost diameter that is larger than an inner diameter of the bore (6). An annular locking ring (14) includes a locking member at a first axial end that is received in the channel (20) of the at least one annular seal (12) and having a ledge portion (68) engaged with the locking shoulder (30) of the annular seal (12). The ledge portion (68) includes at least one slot (76) extending axially there through.

## Description

### FIELD

The present disclosure relates to a seal assembly and more particularly, to a locking mechanism that connects adjacent sealing members into one unitized seal assembly.

### BACKGROUND

This section provides background information related to the present disclosure which is not necessarily prior art.

In well drilling operations, seal assemblies are often required between a bore and a mandrel in which extreme temperatures upwards of 600°F and pressures upwards of 10,000 psi are required to be withstood.

### SUMMARY

This section provides a general summary of the disclosure, and is not a comprehensive disclosure of its full scope or all of its features.

A seal assembly is provided for sealing between an inner surface of a bore and an outer surface of a mandrel and includes at least one annular seal including a channel disposed in an axial end thereof with a locking shoulder facing axially away from an opening end of the channel. The annular seal has an innermost diameter that is smaller than an outer diameter of the mandrel and has an outermost diameter that is larger than an inner diameter of the bore. An annular locking ring includes a locking member at a first axial end that is received in the channel of the at least one annular seal and having a ledge portion engaged with the locking shoulder of the annular seal. The ledge portion includes at least one slot extending axially there through.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a cross-sectional view of a seal assembly according to the principles of the present disclosure;
Figure 2 is a cross-sectional view of an alternative seal assembly according to the principles of the present disclosure;
Figure 3 is a perspective view of the locking ring according to the principles of the present disclosure;
Figure 4 is a side plan view of the locking ring shown in Figure 3;
Figure 5 is an enlarged partial cross-sectional view taken along line 5-5 of Figure 4;
Figure 6 is a perspective view of an alternative locking ring according to the principles of the present disclosure;
Figure 7 is a side plan view of the locking ring shown in Figure 6;
Figure 8 is an enlarged partial cross-sectional view taken along line 8-8 of Figure 7;
Figure 9 is a cross-sectional view of an alternative seal assembly according to the principles of the present disclosure;
Figure 10 is a perspective view of an alternative locking ring according to the principles of the present disclosure;
Figure 11 is an enlarged partial cross-sectional view taken along line 11-11 of Figure 10;
Figure 12 is a perspective view of an alternative locking ring according to the principles of the present disclosure;
Figure 13 is an enlarged partial cross-sectional view taken along line 13-13 of Figure 12;
Figure 14 is a cross-sectional view of a further alternative seal assembly according to the principles of the present disclosure;
Figure 15 is a perspective view of an end ring according to the principles of the present disclosure;
Figure 16 is an enlarged partial cross-sectional view taken along line 16-16 of Figure 15;
Figure 17 is a perspective view of an alternative end ring according to the principles of the present disclosure;
Figure 18 is an enlarged partial cross-sectional view taken along line 18-18 of Figure 17.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the fgures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

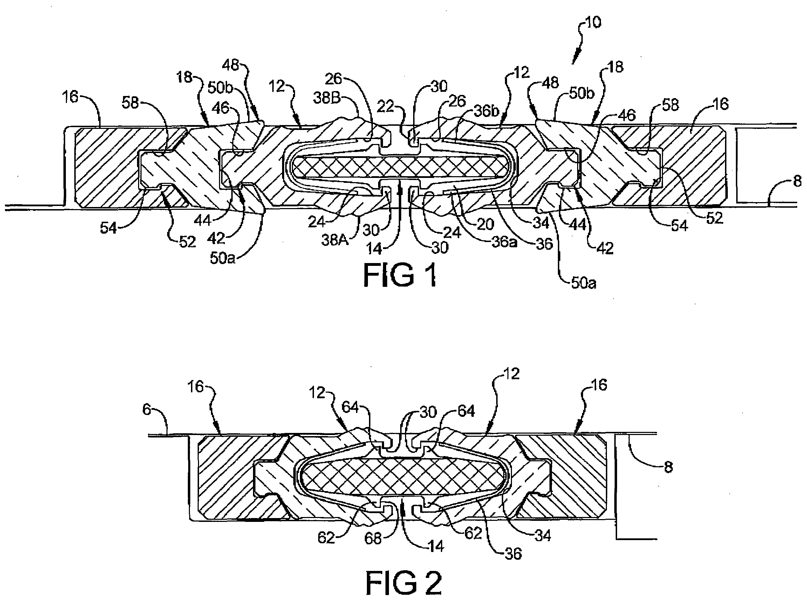

With reference to Figure 1, an interlocking annular pressure seal assembly, according to the principles of the present disclosure, will now be described. The seal assembly 10 includes a pair of annular seals 12 connected together by a locking ring 14. A pair of end rings 16 can be connected to the locking rings 14 by intermediate rings 18. Alternatively, as shown in Fig. 2 the end rings 16 can be connected directly to the annular seals 12.

The seal assembly 10 is designed to be received within a bore 6 and receives a mandrel 8 therein. It should be understood that other arrangements of the seal assembly 10 can also be utilized. The annular seals 12 include a first end 22 having an axially extending annular channel 20 defined therein. The channel 20 includes inner and outer sidewalls 24, 26. Each of the sidewalls 24, 26 is provided with a locking shoulder 30 at an outboard end of the channel 20. The inboard end 34 of the channel 20 can be provided with an annular spring 36 having a generally U-shaped cross-section. The spring 36 includes inner and outer legs 36a, 36b, respectively.

Annular seal 12 includes an outer protruding portion 38B having a larger diameter than an inner diameter of the bore 6 so that an interference is obtained therebetween. Furthermore, an inner protruding portion 38A is provided with a smaller inner diameter than the outer diameter of the mandrel 8 so that an interference fit is obtained therebetween. The amount of interference between the inner and outer protruding portions 38A, 38B with the mandrel 8 and bore 6 is application specific and can vary for different applications. The inner and outer protruding portions 38A, 38B can be disposed on opposite sides of the channel 20 and can include one or more raised annular beads that can be axially spaced from one another. The second end 42 of the annular seals 12 can be provided with a snap feature 44 for engagement with a mating snap feature 46 on a first end 48 of the intermediate ring 18, or alternatively the end rings 46. The snap feature 44 can be a male feature that can be snap fit with the mating snap feature 46 of the intermediate rings 18 in the form of a female feature. The snap feature 46 can include a protruding rib. The first end 48 of the intermediate rings 18 includes radially inwardly extending and outwardly extending protruding portions 50a, 50b which are designed to have an interference fit with the mandrel 8 and bore 6. A second end 52 of the intermediate rings 18 can include a snap feature 54 in the form of a male feature with a protruding rib that can be snap engaged with a corresponding female snap feature 58 of the end rings 16. The corresponding snap features 54, 58 are designed as interferences that allow the end rings 16 to be snap fit engaged with the second end 52 of the intermediate rings 18. As mentioned above, the intermediate rings 18 can be omitted so that fhe annular seals 12 can be directly engaged to the end rings 16 by engaging the male snap feature 44 with the female snap feature 58 of the end rings 16. The end rings 16 can be attached to the annular seals 12 by other known techniques including forming the annular seals 12 with female snap features and the intermediate and end rings 18, 16 with male snap features. The end rings 16 are provided with radially inner and outer surfaces 50, 52, respectively, that are tight fit within the bore 6 and around the mandrel 8, but not necessarily interference fit therewith. The end rings 16 also include a planar end face 54 that faces axially away from the annular seal 12.

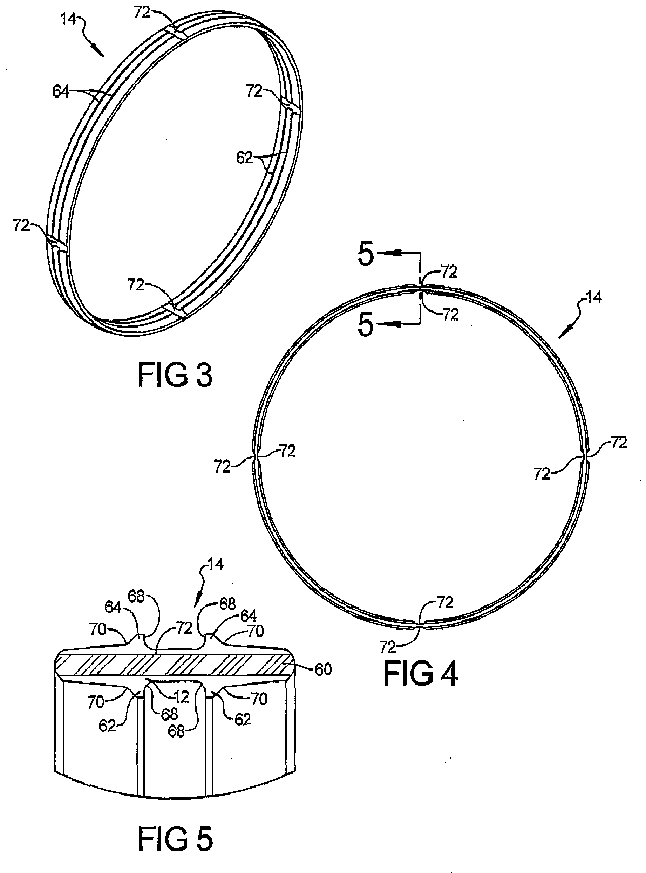

The locking ring 14 can be provided for engaging with two annular seals 12 on opposite ends thereof. As best shown in Figs. 3-5, the locking ring 14 includes an annular body portion 60 that is elongated in an axial direction and a pair of radially inwardly extending locking lugs 62 and a pair of radially outwardly extending locking lugs 64 that are received in the channels 20 of the pair of annular seals 12 and engage the locking shoulders 30. The inwardly and outwardly extending locking lugs 62, 64 of the locking ring 14 are axially spaced from one another and from the axial ends of the annular body portion 60. The radially inwardly and outwardly extending lugs 62, 64 each have a ledge 68 opposing the shoulders 30 of the channels 20 in an assembled condition. The inwardly and outwardly extending lugs 62, 64 also include a beveled edge 70 facing away from the axial center of the body 60 of the locking ring 14. The beveled edges 70 facilitate the insertion of the locking lugs 62, 64 into the channel 20 of the annular seals 12. The locking lugs 62, 64 are provided with one or more slots 72 extending axially through the body 60 and the locking lugs 62, 64. The axial slots 72 ensure pressure passage to the inner faces of the annular channels 20 even when the seal 10 has a substantial amount of interference with the inner and outer faces of the seal.

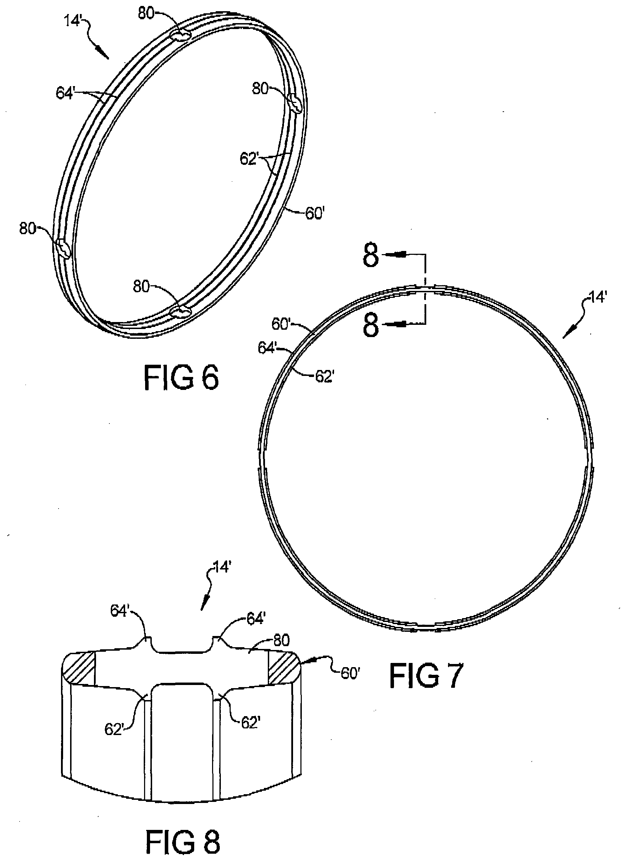

Alternatively, as shown in Figures 6-8, the locking ring 14' can be provided with one or more pressure passages in the form of a hole or holes 80 that extend through the body 60' of the locking ring 14. The holes 80 can extend through the locking lugs 62', 64' so as to extend through the locking lugs 62', 64' and permit pressure passage to the interfaces of the annular channels 20.

The locking ring 14, 14' enables the two opposing seal systems 12/16 to be connected into a unitized assembly thereby reinforcing the radial and axial strength of the assembly 10 against the effects of thermal expansion and pressure. The use of the locking ring 14, 14' also simplifies the installation of the seal assembly 10, as there is only one component versus multiple components to assemble.

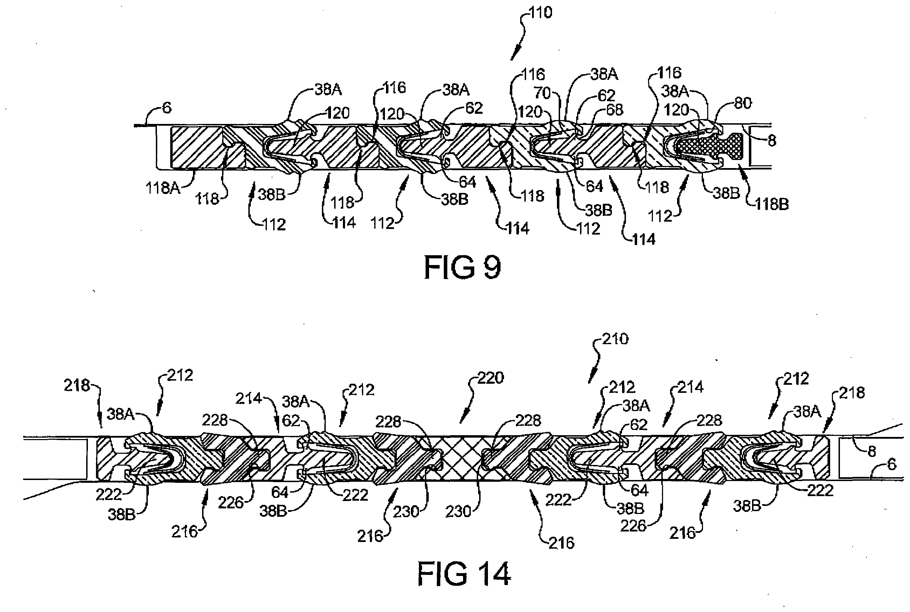

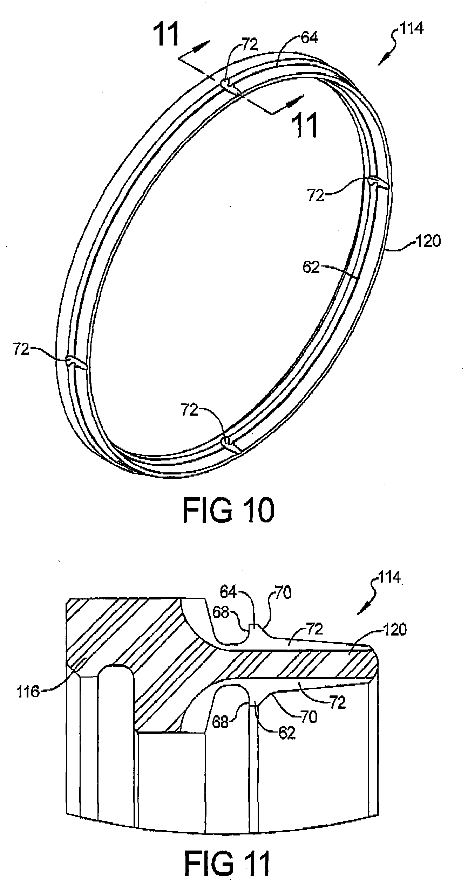

With reference to Figs. 9-11, an alternative seal assembly 110 is shown including locking rings 114 and annular seals 112 having an alternative arrangement. In particular, as shown in Figs. 10-11, the locking rings 114 include a first end with a male locking feature 120 with radially inwardly and outwardly extending lugs 62, 64 that each have a ledge 68 and a beveled edge 70 which facilitate the insertion of the locking lugs 62, 64 into the channel 20 on one end of the annular seals 112. A second end of the locking rings 114 can include a locking feature in a form of a claw connector 116. The claw connector 116 can be in snap fit engagement with a corresponding claw connector 118 on the annular seals 112. The claw connectors 116, 118 can include radially extending locking ribs. The annular seals 112 include an outer protruding portion 38B having a larger diameter than an inner diameter of the bore 6 so that an interference is obtained therebetween. Furthermore, an inner protruding portion 38A is provided with a smaller inner diameter than the outer diameter of the mandrel 8 so that an interference fit is obtained therebetween. The amount of interference between the inner and outer protruding portions 38A, 38B with the mandrel 8 and bore 6 is application specific and can vary for different applications. The inner and outer protruding portions 38A, 38B can be on opposite sides of the channel 20 and can include one or more raised annular beads that can be axially spaced from one another. The assembly 110 can be provided with end rings 118A, 118B having different configurations (i.e. claw connector 116 or male connector 120) that properly engage with the opposite ends of the annular seals 112.

The locking lugs 62, 64 are provided with one or more slots 72 extending axially through the body 120 and the locking lugs 62, 64. The axial slots 72 ensure pressure passage to the inner faces of the annular channels 20 even when the seal 110 has a substantial amount of interference with the inner and outer faces of the seal.

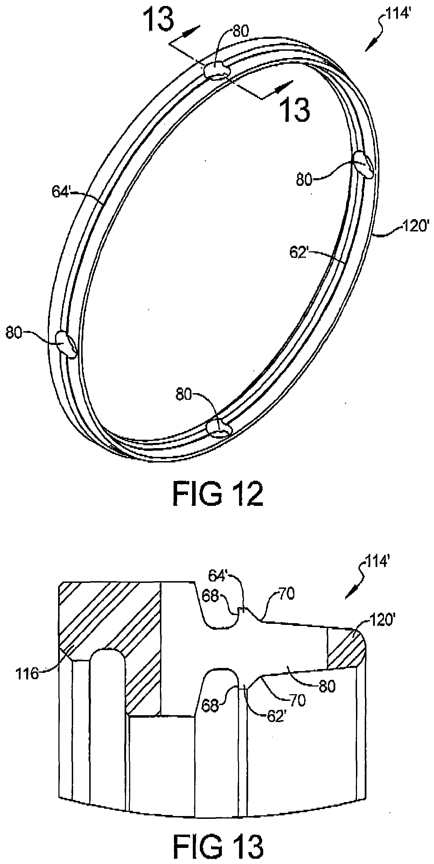

Alternatively, as shown in Figures 12 and 13, the locking ring 114' can be provided with one or more pressure passages in the form of a hole or holes 80 that extend through the body 120'of the locking ring 114'. The holes 80 can extend through the locking lugs 62', 64' so as to extend through the locking lugs 62', 64'and permit pressure passage to the interfaces of the annular channels 20.

With reference to Fig. 14, an alternative seal assembly 210 is shown including locking rings 214, annular seals 212, intermediate seals 216, end rings 218 and center locking ring 220 having an alternative arrangement. In particular, the locking rings 214 include a first end with a male locking feature 222 with radially inwardly and outwardly extending lugs 62, 64 which each have a ledge 68 and a beveled edge 70 which facilitate the insertion of the locking lugs 62, 64 into the channel 20 on one end of the annular seals 212. A second end of the locking rings 214 can include a locking feature in a form of a female connector 226. The female connector 116 can be in snap fit engagement with a corresponding male connector 228 on the intermediate seals 216. The annular seals 212 include an outer protruding portion 38B having a larger diameter than an inner diameter of the bore 6 so that an interference is obtained therebetween. Furthermore, an inner protruding portion 38A is provided with a smaller inner diameter than the outer diameter of the mandrel 8 so that an interference fit is obtained therebetween. The amount of interference between the inner and outer protruding portions 38A, 38B with the mandrel 8 and bore 6 is application specific and can vary for different applications. The inner and outer protruding portions 38A, 38B can be on opposite sides of the channel 20 and can include one or more raised annular beads that can be axially spaced from one another. The assembly 210 can be provided with end rings 218 having a male connector 222 that properly engage with the channels 20 of the annular seals 212.

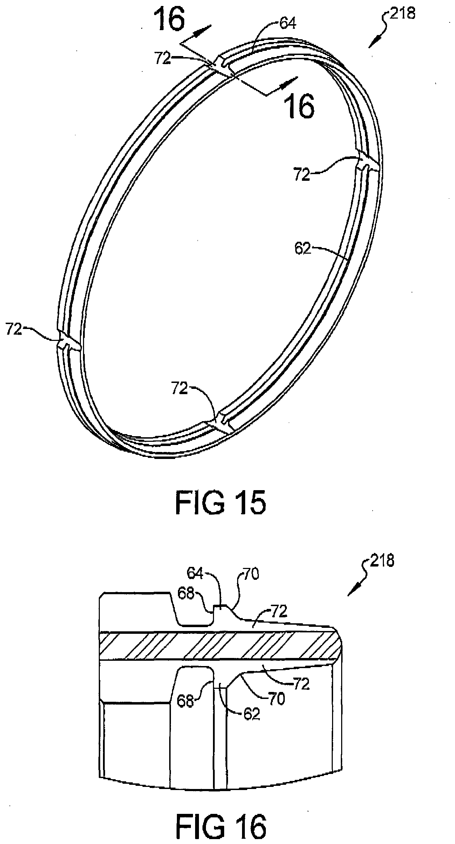

The center locking ring 220 can be provided with female connectors 230 at opposite ends for mating engagement with the male connector 228 of the intermediate seals 216. The male locking feature 222 of the locking rings 214 can be provided with pressure passages in the form of axial slots 72 or radial holes 80, as discussed above. In addition, with reference to Figs. 15 and 16, the end rings 218 can be provided with pressure passages in the form of axial slots 72 that extend through the locking lugs 62, 64 and the body.

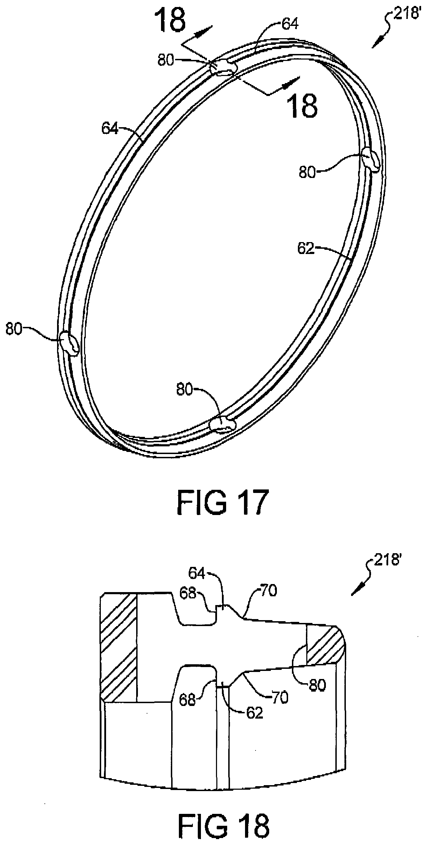

Alternatively, as shown in Figs. 17 and 18 the end ring 218' can be provided with one or more pressure passages in the form of a hole or holes 80 that extend through the body of the end ring 218'. The holes 80 can extend through the locking lugs 62', 64' so as to extend through the locking lugs 62', 64'and permit pressure passage to the interfaces of the annular channels 20.

The seal assembly 10, 12, 110, 210 is designed to be utilized in high temperature and high pressure environments including temperatures upwards of 600°F TO 700°F and pressures upwards of ten to twenty-five thousand psi. It is anticipated that the locking ring 14 can be made from glass-filled polyether ether ketone (PEEK) and that the end rings 16 can be made from carbon-filled polyether ether ketone (PEEK), although other thermoplastics and metals having appropriate mechanical and chemical resistant properties or other materials could also be utilized. The annular seals 12 can be made from a carbon-filled PTFE, although it is anticipated that other materials may also be utilized, depending upon the temperature and pressure requirement of the application. The intermediate rings 18 can be made from carbon-filled PTFE, although it is anticipated that other thermoplastics or elastomers may be utilized. The annular springs 34 can be made from stainless steel materials or other spring steels that can be tempered. An exemplary material that is believed to be useful in this application is available under the name Elgiloy.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A seal assembly (10) for sealing between an inner surface of a bore (6) and a mandrel (8), comprising:
at least one annular seal (12) including a channel (20) in an axial end thereof with a locking shoulder (30) facing axially away from an open end of said channel (20), wherein the annular seal (12) has an innermost diameter that is smaller than an outer diameter of the mandrel (8) and has an outermost diameter that is larger than an inner diameter of the bore (6); and
an annular locking ring (14) including a locking member (62) at a first axial end that is received in the channel (20) of said at least one annular seal (12) and having a ledge portion (68) engaged with said locking shoulder (30) of said annular seal (12), the annular locking ring (14) including a pressure passage in a form of at least one of a slot (72) extending axially through the ledge portion (68) or a hole (80) extending radially through the annular locking ring (14) and interrupting the ledge portion (68).

2. The seal assembly (10) according to claim 1, further comprising an end ring (16) including a locking feature (54) adapted to directly engage a complementary locking feature (44) of said annular seal (12).

3. The seal assembly (10) according to claim 1, wherein said channel (20) of said annular seal (12) includes an annular spring (36) disposed therein, said annular spring (36) having a U-shaped cross-section.

4. The seal assembly (10) according to claim 3, wherein said locking member (62) of said locking ring (14) is received in said annular spring (36) of said annular seal (12).

5. The seal assembly (10) according to claim 4, wherein said at least one annular seal (12) includes a radially inner sidewall and a radially outer sidewall each having a protrusion (38A, 38B).

6. The seal assembly (10) according to claim 1, wherein said locking ring (14) includes a pair of locking members (62, 64) each having a radially inwardly extending ledge (68) and a radially outwardly extending ledge (68).

7. The seal assembly (10) according to claim 6, wherein said at least one annular seal (12) includes first and second annular seals (12), said receiving channel (20) of said first and second annular seals (12) include radially inner and outer sidewalls (24, 26) each having a shoulder (30) that engage said radially inwardly and outwardly extending ledges (68) of said pair of locking members (62, 64).

8. The seal assembly (10) according to claim 2, wherein said end ring (16) is made from a thermoplastic material.

9. The seal assembly (10) according to claim 1, wherein said locking ring (14) is made from a thermoplastic material.

10. The seal assembly (10) according to claim 1, wherein said at least one annular seal (12) is made from PTFE or modified PTFE.

11. The seal assembly (10) according to claim 1, wherein said locking ring (14) and said at least one annular seal (12) are assembled together by inserting said locking member (62) in said receiving channel (20) of said of annular seal (12) to secure the annular seal (12) to the locking ring (14) as a unitized seal.

12. The seal assembly (10) according to claim 1, wherein said receiving channel (20) of said annular seal (12) includes an annular spring (36) disposed therein.

13. A seal assembly (110) for sealing between an inner surface of a bore (6) and a mandrel (8), comprising:
at least one annular seal (112) including a first axial end defining an annular channel (20) therein with a locking shoulder (30) facing axially away from an opening end of said channel (20), wherein said annular seal (112) has an innermost diameter that is smaller than an outer diameter of the mandrel (8) and has an outermost diameter that is larger than an inner diameter of the bore (6); and
an annular locking ring (114) including a locking member (62) at a first axial end that is received in the channel (20) of said at least one annular seal (112) and having a ledge portion (68) engaged with said locking shoulder (30) of said annular seal (112), said locking ring (114) having a claw connector (116) at a second axial end.

14. The seal assembly (110) according to claim 13, wherein said locking ring (114) includes a pressure passage in a form of at least one of a slot (72) extending axially through the ledge portion (68) or a hole (80) extending radially through the annular locking ring (114, 114') and interrupting the ledge portion (68).

15. The seal assembly (110) according to claim 13, wherein said at least one annular seal (112) includes a claw connector (118) on a second axial end.

16. The seal assembly (110) according to claim 15, further comprising an end ring (118A) with a claw connector (118) for engaging with the claw connector (116) of the annular seal (112).

17. The seal assembly (110) according to claim 15, wherein said at least one annular seal (112) includes at least two annular seals (112) and further comprising an end ring (118A) with a male connector (120) for engaging with the channel (20) of one of the at least two annular seals (112).

18. The seal assembly (110) according to claim 13, wherein said claw connector (116) includes a radially extending rib.

19. A seal assembly (210) for sealing between an inner surface of a bore (6) and a mandrel (8), comprising:
at least one annular seal (212) including a first axial end defining an annular channel (20) therein with a locking shoulder (30) facing axially away from an opening end of said channel (20), wherein said annular seal (212) has an innermost diameter that is smaller than an outer diameter of the mandrel (8) and has an outermost diameter that is larger than an inner diameter of the bore (6); and
an annular locking ring (214) including a locking member (222) at a first axial end that is received in the channel (20) of said at least one annular seal (212) and having a ledge portion (68) engaged with said locking shoulder (30) of said annular seal (212), said locking ring (214) having a female connector (226) at a second axial end.

20. The seal assembly (210) according to claim 19, wherein said locking ring (214) includes a pressure passage in a form of at least one of a slot (72) extending axially through the ledge portion (68) or a hole (80) extending radially through the annular locking ring (214) and interrupting the ledge portion (68).

21. The seal assembly (210) according to claim 19, wherein said at least one annular seal (212) includes a male connector on a second axial end.

22. The seal assembly (210) according to claim 19, wherein said at least one annular seal (212) includes at least two annular seals (212) and further comprising an end ring (218) with a male connector (222) for engaging with the channel (20) of one of the at least two annular seals (212).

23. The seal assembly (210) according to claim 22, wherein said locking ring (214) includes a pressure passage in a form of at least one of a slot (76) extending axially through the ledge portion (68) or a hole (80) extending radially through the annular locking ring (214) and interrupting the ledge portion (68).

24. The seal assembly (210) according to claim 19, further comprising an intermediate seal (216) having a female connector on a first axial end for connection to the male connector of the annular seal (212).

25. The seal assembly (210) according to claim 24, wherein said intermediate seal (216) includes a male connector (228) on a second axial end.

26. The seal assembly (210) according to claim 19, wherein said female connector (226) of said locking ring (214) includes a radially extending locking rib (226).
